(19) **Europäisches Patentamt / European Patent Office / Office européen des brevets**

(11) **EP 4 773 196 A1**

(12) # EUROPEAN PATENT APPLICATION
published in accordance with Art. 153(4) EPC

(43) Date of publication:
08.07.2026 Bulletin 2026/28

(21) Application number: 24859873.2

(22) Date of filing: 29.08.2024

(51) International Patent Classification (IPC):
H01M 4/13 $^{(2010.01)}$          H01M 10/052 $^{(2010.01)}$
H01M 10/0587 $^{(2010.01)}$        H01M 50/56 $^{(2021.01)}$
H01M 50/538 $^{(2021.01)}$         H01M 50/545 $^{(2021.01)}$

(52) Cooperative Patent Classification (CPC):
H01M 4/13; H01M 10/052; H01M 10/0587;
H01M 50/538; H01M 50/545; H01M 50/56;
Y02E 60/10; Y02P 70/50

(86) International application number:
PCT/JP2024/030878

(87) International publication number:
WO 2025/047844 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 JP 2023141361

(71) Applicant: **Panasonic Intellectual Property Management Co., Ltd.**
Kadoma-shi, Osaka 571-0057 (JP)

(72) Inventors:
• **YOSHINARI Rina**
Kadoma-shi, Osaka 571-0057 (JP)
• **ISHIGURO Tasuku**
Kadoma-shi, Osaka 571-0057 (JP)

(74) Representative: **Novagraaf International SA**
Chemin de l'Echo 3
1213 Onex, Geneva (CH)

(54) **CYLINDRICAL SECONDARY BATTERY**

(57) Provided is a cylindrical secondary battery (10) comprising: an electrode body (14) in which a band-shaped positive electrode (11) and a band-shaped negative electrode (12) are wound along a longitudinal direction with a separator (13) therebetween; a nonaqueous electrolyte; and a cylindrical outer-casing can (15) that houses the electrode body (14) and the nonaqueous electrolyte, wherein the positive electrode (11) includes a positive electrode core (30), and a positive electrode mixture layer (32) disposed on the surface of the positive electrode core (30), wherein a positive electrode core exposed part (34), where the positive electrode core (30) is exposed, is formed at a portion in contact with only one end of the positive electrode (11) in the lateral direction thereof, and wherein the positive electrode core exposed part (34) is not formed in a range of L/10 from an outermost winding edge in the longitudinal direction of the positive electrode (11) when L represents the length of the positive electrode (11) in the longitudinal direction.

FIG, 1

**Description**

TECHNICAL FIELD

The present disclosure relates to a cylindrical secondary battery, and particularly to the structure of an electrode assembly thereof.

BACKGROUND ART

A cylindrical secondary battery comprises an electrode assembly in which a band-shaped positive electrode and a band-shaped negative electrode are wound along the longitudinal direction via a separator. The positive electrode has a positive electrode core and a positive electrode mixture layer formed on a surface of the positive electrode core.

For example, in a cylindrical secondary battery disclosed in Patent Literature 1, a rectangular positive electrode core exposed portion where a positive electrode current collecting plate is exposed is formed at a portion in contact with only one end of opposite ends of the positive electrode in a transverse direction, and a positive electrode tab for current collection is joined to the positive electrode core exposed portion.

CITATION LIST

PATENT LITERATURE

PATENT LITERATURE 1: Japanese Unexamined Patent Application Publication No. 2004-311282

SUMMARY

The positive electrode core exposed portion on the external winding side in the longitudinal direction may become wrinkled due to expansion of the positive electrode during charge and discharge of the battery. In particular, the positive electrode core exposed portion on the outermost winding side is likely to become wrinkled. When the positive electrode core exposed portion becomes wrinkled, the distance between the positive electrode and the negative electrode may vary, resulting in an increase in the resistance value.

Accordingly, it is an advantage of the present disclosure to provide a cylindrical secondary battery capable of suppressing the formation of wrinkles in the positive electrode core exposed portion.

A cylindrical secondary battery according to the present disclosure comprises an electrode assembly in which a band-shaped positive electrode and a band-shaped negative electrode are wound along a longitudinal direction via a separator; a non-aqueous electrolyte; and a cylindrical housing can housing the electrode assembly and the non-aqueous electrolyte, wherein the positive electrode has a positive electrode core and a positive electrode mixture layer disposed on a surface of the positive electrode core, a positive electrode core exposed portion where the positive electrode core is exposed is formed at a portion in contact with only one end of the positive electrode in a transverse direction, and when L denotes a length of the positive electrode in the longitudinal direction, the positive electrode core exposed portion is not formed within a range of L/10 from an external winding side in the longitudinal direction.

According to the cylindrical secondary battery of the present disclosure, the formation of wrinkles in the positive electrode core exposed portion can be suppressed.

BRIEF DESCRIPTION OF DRAWING

FIG. 1 is a longitudinal sectional view of a cylindrical secondary battery of an example of an embodiment.
FIG. 2 is a schematic view illustrating a positive electrode in a developed state.

DESCRIPTION OF EMBODIMENTS

Hereinafter, an example of an embodiment of the present disclosure will be described in detail. In the following description, specific shapes, materials, directions, values, and the like, which are examples for facilitating understanding of the present disclosure, may be appropriately modified in accordance with applications, purposes, specifications, and the like.

[Cylindrical Secondary Battery]

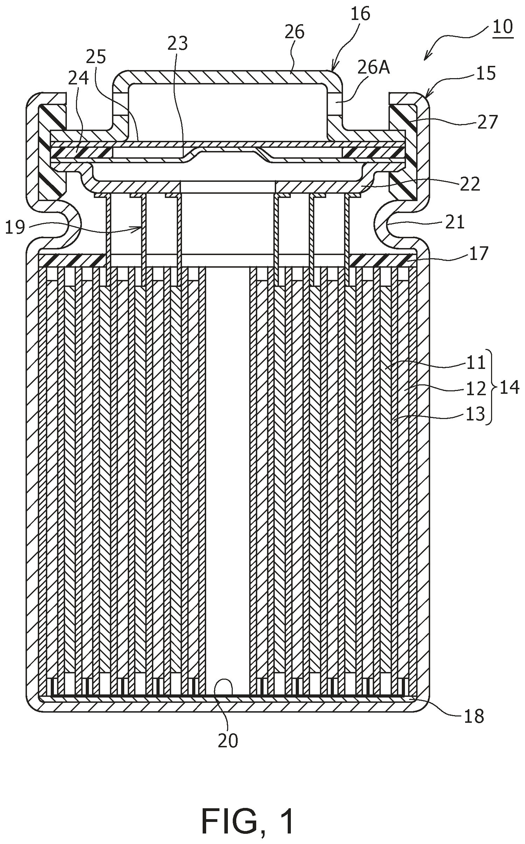

With reference to FIG. 1, a cylindrical secondary battery (hereinafter, referred to as the secondary battery 10) of an example of an embodiment will be described. For convenience of description, each member may be described below using the axial direction, the radial direction, and the circumferential direction. A sealing assembly 16 side will be described as the "upper side", and the bottom side of the housing can 15 will be described as the "lower side".

The secondary battery 10 has an electrode assembly 14, a non-aqueous electrolyte (not illustrated), and an housing can 15 housing the electrode assembly 14 and the non-aqueous electrolyte. The electrode assembly 14 has a wound structure in which a positive electrode 11 and a negative electrode 12 are wound via a separator 13. Each of the positive electrode 11, the negative electrode 12, and the separator 13 is an elongated band-shaped body, which is spirally wound along the longitudinal direction to be alternately stacked in a radial direction of the electrode assembly 14. The separator 13 is formed to be one size larger than the positive electrode 11 and the negative electrode 12, and two of the separator 13 are disposed to sandwich the positive electrode 11.

For the separator 13, a porous sheet having an ion permeation property and an insulation property, or the like is used, for example. Specific examples of the porous sheet include a microporous thin film, a woven fabric, and a nonwoven fabric. Preferred materials for the separator 13 include olefin-based resins such as polyethylene and polypropylene, and cellulose. The separator 13 may be a laminate having a cellulose fiber layer and a thermoplastic resin fiber layer such as an olefin-based resin. Alternatively, the separator 13 may be a multilayer separator including a polyethylene layer and a polypropylene layer, and a separator 13 having a surface coated with materials such as aramid resin or ceramics may be used.

The non-aqueous electrolyte has lithium ion conductivity. The non-aqueous electrolyte may be a liquid electrolyte (electrolyte solution) or a solid electrolyte. The liquid electrolyte (electrolyte solution) includes a non-aqueous solvent and an electrolyte salt dissolved in the non-aqueous solvent. As the non-aqueous solvent, for example, esters, ethers, nitriles, amides, and mixed solvents composed of two or more of these solvents may be used. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may also contain a halogen-substituted product (e.g., fluoroethylene carbonate) in which at least a portion of the hydrogen atoms in these solvents are replaced with halogen atoms such as fluorine. As the electrolyte salt, for example, a lithium salt such as $LiPF_6$ is used.

As the solid electrolyte, for example, a solid or gel-type polymer electrolyte or an inorganic solid electrolyte may be used. As the inorganic solid electrolyte, materials known for use in all-solid lithium-ion secondary batteries (oxide-based solid electrolytes, sulfide-based solid electrolytes, halogen-based solid electrolytes, etc.) may be used. The polymer electrolyte includes, for example, a lithium salt and a matrix polymer, or a non-aqueous solvent, a lithium salt, and a matrix polymer. As the matrix polymer, for example, polymer materials capable of absorbing the non-aqueous solvent and forming a gel may be used. Examples of the polymer materials include fluororesins, acrylic resins, and polyether resins.

The sealing assembly 16 seals an opening of an upper end of the housing can 15 to seal an inside portion of the secondary battery 10. Insulating plates 17 and 18 are provided on the upper and lower sides of the electrode assembly 14, respectively. A positive electrode tab 19 extends through a through hole of the insulating plate 17 toward the upper and lower sides and connects a filter 22, a bottom plate of the sealing assembly 16, to the positive electrode 11 included in the electrode assembly 14. As a result, the positive electrode 11 and the sealing assembly 16 are connected, and in the secondary battery 10, a cap 26, a top plate of the sealing assembly 16 electrically connected to the filter 22, becomes a positive electrode terminal. The positive electrode tab 19 is, for example, an aluminum tab.

On the other hand, at the lower side of the negative electrode 12 (one end of the negative electrode 12 in the transverse direction), a negative electrode core exposed portion where no negative electrode mixture layer is provided in the negative electrode core protrudes. The negative electrode core exposed portion is formed from the internal winding end portion to the external winding end portion in the longitudinal direction of the elongated negative electrode plate. At the lower side of the electrode assembly 14, a negative electrode current collecting plate 20 is provided, and the negative electrode core exposed portion is joined to the negative electrode current collecting plate 20. Accordingly, the negative electrode 12 and the negative electrode current collecting plate 20 are electrically connected to each other. Furthermore, the negative electrode current collecting plate 20 is joined to the inner surface of the bottom of the housing can 15, whereby the negative electrode current collecting plate 20 and the housing can 15 are electrically connected to each other. Through this connection, the housing can 15 functions as a negative electrode external terminal.

Note that the negative electrode of the present disclosure is not limited to the above-described end-face current collecting structure. For example, a negative electrode tab may be provided in the vicinity of the internal winding end portion of the negative electrode 12 so that the negative electrode tab is drawn out from the lower side of the negative electrode 12 and connected to the housing can 15. Meanwhile, a negative electrode core exposed portion may be formed at the external winding end portion of the negative electrode 12, and this negative electrode core exposed portion may be in contact with an inner surface of the housing can 15 to electrically connect the vicinity of the external winding end portion of the negative electrode 12 to the housing can 15.

The housing can 15 is a bottomed cylindrical metallic container having an opening on one side in an axial direction. A gasket 27 is provided between the housing can 15 and the sealing assembly 16 to achieve sealability of the inside portion of the secondary battery 10. The housing can 15 has a grooved portion 21 that supports the sealing assembly 16, which is formed, for example, by pressing side surface portions from the outside. The grooved portion 21 is preferably formed in a circular shape along a circumferential direction of the housing can 15, and the upper surface of the grooved portion 21 supports the sealing assembly 16.

The sealing assembly 16 has a filter 22, a lower vent member 23, an insulating member 24, an upper vent member 25, and the cap 26, which are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at respective central portions thereof, and the insulating member 24 is interposed between the respective circumferential portions thereof. If the internal pressure of the battery increases due to abnormal heat generation, for example, the lower vent member 23 breaks, and the upper vent member 25 consequently bulges toward the cap 26 and separates from the lower vent member 23, thereby cutting off the electrical connection between the two members. If the internal pressure further increases, the upper vent member 25 breaks, and gas is discharged through the opening portion 26A of the cap 26.

[Positive Electrode]

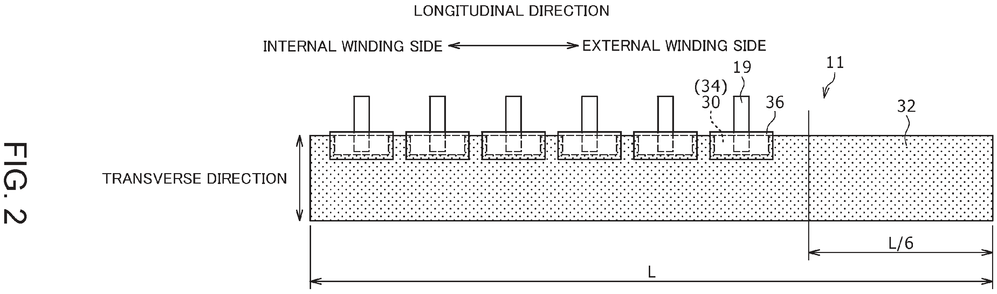

FIG. 2 illustrates a positive electrode 11 as an example of an embodiment. Hereinafter, the positive electrode 11 may be described using the longitudinal direction and the transverse direction. In this case, the longitudinal direction is the winding direction of the positive electrode 11, and the transverse direction is the axial direction. In addition, the longitudinal direction may be described using the internal winding side and the external winding side.

The positive electrode 11 has a positive electrode core 30 and a positive electrode mixture layer 32 disposed on a surface of the positive electrode core 30. A positive electrode core exposed portion 34 where the positive electrode core 30 is exposed is disposed on a surface of the positive electrode 11. The positive electrode core exposed portion 34 is in contact with only one end portion of opposite end portions of the positive electrode 11 in the width direction.

When L denotes the length of the positive electrode 11 in the longitudinal direction, the positive electrode core exposed portion 34 is not formed within a range of L/10 from the external winding side in the longitudinal direction, and more preferably is not formed within a range of L/6 from the external winding side in the longitudinal direction. In other words, the outermost positive electrode core exposed portion 34 is formed from a position of L/10 from the external winding side in the longitudinal direction, and more preferably is formed from a position of L/6 from the external winding side in the longitudinal direction. Accordingly, the positive electrode core exposed portion 34 on the external winding side in the longitudinal direction is capable of suppressing the formation of wrinkles as the positive electrode 11 expands during charge and discharge of the secondary battery 10.

The positive electrode core exposed portion 34 is preferably formed within a range of L/4 from the external winding side of the positive electrode 11 in the longitudinal direction, thus making it possible to suppress an increase in the resistance value of the secondary battery 10. In addition, the length L of the positive electrode 11 in the longitudinal direction is preferably greater than or equal to 3000 mm.

A plurality of positive electrode core exposed portions 34 are preferably disposed on the surface of the positive electrode 11. The number of the positive electrode core exposed portions 34 is preferably greater than or equal to 6. Each of the positive electrode core exposed portions 34 is connected to one of the positive electrode tabs 19, thus improving the current collecting efficiency of the positive electrode 11 as well as the output characteristics of the secondary battery 10. When there are a plurality of, in particular, greater than or equal to six positive electrode core exposed portions 34, the formation of wrinkles caused by the positive electrode core exposed portions 34 on the external winding side in the longitudinal direction, which tend to be formed within a range of L/10 from the external winding side, can be suppressed.

The positive electrode core exposed portion 34, the positive electrode tab 19, and the portion of the positive electrode mixture layer 32 adjacent to the positive electrode core exposed portion 34 are covered with the protective member 36. In other words, the protective member 36 covers the positive electrode tab 19, the positive electrode core exposed portion 34, and a portion of the positive electrode mixture layer 32. The protective member 36 is an insulating member that prevents the positive electrode tab 19 and the positive electrode core exposed portion 34 from internally short-circuiting with the opposing negative electrode mixture layer when the separator 13 is damaged.

The protective member 36 is, for example, an adhesive tape having a base material portion and an adhesive portion formed on one surface of the base material portion. A heat-resistant layer including, for example, inorganic particles such as metal oxides can be provided between the base material portion and the adhesive portion. The base material portion may be made of an insulating resin, and, for example, polyphenylene sulfide (PPS), polyether ether ketone (PEEK), polyimide (PI), polypropylene (PP), polyethylene terephthalate (PET), and polybutylene terephthalate (PBT) may be used. The thickness of the base material portion is, for example, greater than or equal to 5 $\mu$m and less than or equal to 50 $\mu$m.

The adhesive portion is a portion for adhering the protective member 36 to the surface of the positive electrode 11. The thickness of the adhesive portion is, for example, greater than or equal to 1 $\mu$m and less than or equal to 30 $\mu$m. The adhesive portion may include at least one of the group consisting of a rubber-based polymer and an acrylic-based polymer. Since the rubber-based polymer and the acrylic-based polymer have adhesiveness, the protective member 36 can be adhered to the surface of the positive electrode 11. For example, a silicone-based polymer may be further added to the adhesive portion.

For the positive electrode core 30, a foil of a metal stable within a potential range of the positive electrode, such as aluminum, a film in which such a metal is disposed on a surface layer thereof, and the like may be used. The thickness of the positive electrode core 30 is, for example, greater than or equal to 10 $\mu$m and less than or equal to 30 $\mu$m.

The positive electrode mixture layer 32 is preferably formed on both the surfaces of the positive electrode core 30. The thickness of the positive electrode mixture layer 32 is, for example, greater than or equal to 10 $\mu$m and less than or equal to 150 $\mu$m on one side of the positive electrode core 30. The positive electrode mixture layer 32 includes, for example, a positive electrode active material, a conductive agent, and a binder. The positive electrode 11 can be produced by, for example, applying a positive electrode mixture slurry including the positive electrode active material, the conductive agent, the binder, and the like on both the surfaces of the positive electrode core 30, drying the coating film, and then rolling the coating film by using a roller or the like.

Examples of the positive electrode active material included in the positive electrode mixture layer 32 include a lithium-transition metal composite oxide containing a transition metal element, such as Co, Mn, or Ni. The lithium-transition metal composite oxide is, for example, $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, or $Li_2MPO_4F$ (M is at least one of the group consisting of Na, Mg, Sc, Y, Mn, Fe, Co, Ni, Cu, Zn, Al, Cr, Pb, Sb, and B, where $0 < x \leq 1.2$, $0 < y \leq 0.9$, $2.0 \leq z \leq 2.3$). These may be used alone, or a plurality of types thereof may be mixed for use.

The positive electrode active material preferably includes lithium-nickel composite oxide in terms of its ability to increase the capacity of the secondary battery 10. Examples of the lithium-nickel composite oxide include $Li_xNiO_2$, $Li_xCo_yNi_{1-y}O_2$, and $Li_xNi_{1-y}M_yO_z$ (M is at least one of the group consisting of Na, Mg, Sc, Y, Mn, Fe, Co, Ni, Cu, Zn, Al, Cr, Pb, Sb, and B, where $0 < x \leq 1.2$, $0 < y \leq 0.9$, $2.0 \leq z \leq 2.3$). The higher the Ni content in the lithium-nickel composite oxide, the higher the capacity.

Examples of the conductive agent included in the positive electrode mixture layer 32 include carbon-based particles such as carbon black (CB), acetylene black (AB), Ketjenblack, carbon nanotube (CNT), graphene, and graphite. These may be used alone or may be used in combination with two or more thereof.

Examples of the binder included in the positive electrode mixture layer 32 include a fluororesin such as polytetrafluoroethylene (PTFE) and polyvinylidene fluoride (PVDF), polyacrylonitrile (PAN), a polyimide resin, an acrylic resin, and a polyolefin resin. These may be used alone or may be used in combination with two or more thereof.

The negative electrode 12 has a negative electrode current collector and a negative electrode mixture layer disposed on a surface of the negative electrode current collector. For the negative electrode current collector, a foil of a metal stable within a potential range of the negative electrode, such as copper, a film in which such a metal is disposed on a surface layer thereof, and the like may be used. The thickness of the negative electrode current collector is, for example, greater than or equal to 5 $\mu$m and less than or equal to 30 $\mu$m.

The negative electrode mixture layer is preferably formed on both surfaces of the negative electrode current collector. The thickness of the negative electrode mixture layer is, for example, greater than or equal to 10 $\mu$m and less than or equal to 150 $\mu$m on one side of the negative electrode current collector. The negative electrode mixture layer includes, for example, a negative electrode active material and a binder. The negative electrode 12 can be produced by, for example, applying a negative electrode mixture slurry including the negative electrode active material, the binder, and the like on both the surfaces of the negative electrode current collector, drying the coating film, and then rolling the coating film by using a roller or the like.

The negative electrode active material included in the negative electrode mixture layer is not particularly limited as long as it can reversibly occlude and release lithium ions, and carbon materials such as graphite are typically used. The graphite may be any of natural graphite such as flake graphite, massive graphite, and amorphous graphite, and artificial graphite such as massive artificial graphite and graphitized mesophase carbon microbead.

As the negative electrode active material, a metal that forms an alloy with Li, such as Si and Sn, a metal compound including Si, Sn, and the like, a lithium-titanium composite oxide, and the like may also be used. For example, a Si-containing compound represented by $SiO_x$ ($0.5 \leq x \leq 1.6$), a Si-containing compound in which fine particles of Si are dispersed in a lithium silicate phase represented by $Li_{2y}SiO_{(2+y)}$ ($0 < y < 2$), or a Si-containing compound in which Si is dispersed in a carbon material may be used in combination with graphite.

Examples of the binder included in the negative electrode mixture layer include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These may be used alone or may be used in combination with two or more thereof.

EXAMPLES

Hereinafter, the present disclosure will be further described with Examples, but the present disclosure is not limited to these Examples.

<Example 1>

[Production of Positive Electrode]

As a positive electrode active material, an aluminum-containing lithium nickel cobaltate represented by $LiNi_{0.88}Co_{0.09}Al_{0.03}O_2$ was used. First, 100 parts by mass of the positive electrode active material, 1 part by mass of acetylene black (AB), and 1 part by mass of polyvinylidene fluoride (PVDF) were mixed, and an appropriate amount of N-methyl-2-pyrrolidone (NMP) was added to prepare a positive electrode mixture slurry. Next, the positive electrode mixture slurry was applied to both surfaces of a band-shaped positive electrode core composed of an aluminum foil having a thickness of 15 $\mu$m so that six positive electrode core exposed portions were formed. As illustrated in FIG. 2, the positive electrode core exposed portions were in contact with only one end of positive electrode in the width direction. When L denotes the length of the positive electrode in the longitudinal direction, the outermost positive electrode core exposed portion was formed at a position of L/6 from the external winding side in the longitudinal direction.
The coating film was dried and rolled. Next, the coating film was cut into a predetermined electrode plate size to produce a positive electrode in which a positive electrode mixture layer was formed on both surfaces of a positive electrode core. Thereafter, a positive electrode tab made of aluminum was welded to each of six positive electrode core exposed portions, and an insulating tape was affixed to cover the positive electrode core exposed portions, the positive electrode tab, and a part of the positive electrode mixture layer adjacent to the positive electrode mixture layer.

[Production of Negative Electrode]

Mixing 95 parts by mass of graphite, 5 parts by mass of SiO oxide (SiO), 1 part by mass of sodium carboxymethylcellulose (CMC-Na), 1 part by mass of styrene-butadiene rubber (SBR) were performed, and an appropriate amount of water was added to prepare a negative electrode mixture slurry. Then, the negative electrode mixture slurry was applied to both surfaces of a band-shaped negative electrode core composed of copper foil having a thickness of 8 $\mu$m, dried, then rolled and cut into a predetermined electrode plate size to produce a negative electrode in which a negative electrode mixture layer is formed on both the surfaces of the negative electrode corer. At the lower side of the negative electrode (one end of the negative electrode in the transverse direction), a negative electrode core exposed portion where no negative electrode mixture layer was provided on the negative electrode core was formed, and a nickel negative electrode current collector was welded to the negative electrode core exposed portion.

[Preparation of Non-Aqueous Electrolyte]

To 100 parts by mass of a mixed solvent in which ethylene carbonate (EC) and dimethyl carbonate (DMC) were mixed at a volume ratio of 3:7 was added 5 parts by mass of vinylene carbonate (VC), lithium hexafluorophosphate (LiPF$_6$) was dissolved in the mixture at a concentration of 1.5 mol/liter, thereby preparing a non-aqueous electrolyte.

[Production of Test Cell]

The positive electrode and the negative electrode were spirally wound via a microporous membrane separator made of polyethylene to produce a wound electrode assembly. This electrode assembly was housed in a bottomed cylindrical housing can, a negative electrode tab was welded to the bottom of the bottomed cylindrical housing can, and a positive electrode tab was welded to a sealing assembly. The non-aqueous electrolyte was injected into the housing can, and an opening portion of the housing can was sealed with the sealing assembly via a gasket to produce a cylindrical test cell.

[Charge-Discharge Cycle]

The test cell was charged under a temperature environment of 25°C at a constant current of 0.3 C until a battery voltage reached 4.2 V, and then charged at a constant voltage of 4.2 V until a current value reached 0.01 C. Thereafter, the test cell was discharged to 2.5 V at a constant current of 0.5 C, and this charge-discharge operation was defined as one cycle.

[Evaluation of Direct Current Resistance]

The direct current resistance (DCIR) was calculated using the following equation, based on the closed-circuit voltage (CCV) measured 10 seconds after the discharge and the current value (I10s) measured 10 seconds after the discharge.

$$DCIR = (OCV - CCV)/I10s$$

The resistance of 100 test cells was measured to calculate an average value, and the values of Examples and Comparative Examples were each calculated by taking the average resistance value of Comparative Example 1 as 1.00.

[Evaluation of Wrinkle Formation in Positive Electrode Core Exposed Portion]

After the charge-discharge cycles, the 100 test cells were disassembled to investigate the number of test cells in which the positive electrode core exposed portion had become wrinkled.

<Example 2>

A test cell was produced and evaluated in the same manner as in Example 1, except that the outermost positive electrode core exposed portion was formed at a position of L/5.3 from the external winding side in the longitudinal direction in the production of the positive electrode.

<Example 3>

A test cell was produced and evaluated in the same manner as in Example 1, except that the outermost positive electrode core exposed portion was formed at a position of L/5L from the external winding side in the longitudinal direction in the production of the positive electrode.

<Example 4>

A test cell was produced and evaluated in the same manner as in Example 1, except that the outermost positive electrode core exposed portion was formed at a position of L/4.5L from the external winding side in the longitudinal direction in the production of the positive electrode.

<Example 5>

A test cell was produced and evaluated in the same manner as in Example 1, except that the outermost positive electrode core exposed portion was formed at a position of L/4 from the external winding side in the longitudinal direction in the production of the positive electrode.

<Example 6>

A test cell was produced and evaluated in the same manner as in Example 1, except that the outermost positive electrode core exposed portion was formed at a position of L/10 from the external winding side in the longitudinal direction in the production of the positive electrode.

<Comparative Example 1>

A test cell was produced and evaluated in the same manner as in Example 1, except that the outermost positive electrode core exposed portion was formed at a position of L/16.7 from the external winding side in the longitudinal direction in the production of the positive electrode.

<Comparative Example 2>

A test cell was produced and evaluated in the same manner as in Example 1, except that the outermost positive electrode core exposed portion was formed at a position of L/11 from the external winding side in the longitudinal direction in the production of the positive electrode.

<Comparative Example 3>

A test cell was produced and evaluated in the same manner as in Example 1, except that the outermost positive electrode core exposed portion was formed at a position of L/3.3 from the external winding side in the longitudinal direction in the production of the positive electrode.

<Comparative Example 4>

A test cell was produced and evaluated in the same manner as in Example 1, except that the outermost positive electrode core exposed portion was formed at a position of L/2.8 from the external winding side in the longitudinal direction in the production of the positive electrode.
Table 1 shows the evaluation results of the test cells according to Examples and Comparative Examples.

[Table 1]

| | Position of outermost positive electrode core exposed portion from external winding side | Resistance value (with Comparative Example 1 set to 1.00) | Wrinkle in positive electrode core exposed portion |
|---|---|---|---|
| Example 1 | L/6 | 1.03 | 2/100 |
| Example 2 | L/5.3 | 1.05 | 2/100 |
| Example 3 | L/5 | 1.05 | 2/100 |
| Example 4 | L/4.5 | 1.06 | 0/100 |
| Example 5 | L/4 | 1.07 | 3/100 |
| Example 6 | L/10 | 1.00 | 10/100 |
| Comparative Example 1 | L/16.7 | 1.00 | 80/100 |
| Comparative Example 2 | L/11 | 1.00 | 30/100 |
| Comparative Example 3 | L/3.3 | 1.13 | 0/100 |
| Comparative Example 4 | L/2.8 | 1.17 | 0/100 |

As shown in Table 1, the test cells of Examples 1 to 6 suppressed the formation of wrinkles in the positive electrode core exposed portion while suppressing the resistance value. On the other hand, the test cells of Comparative Examples 1 and 2 suppressed the resistance value but failed to suppress the formation of wrinkles in the positive electrode core exposed portion. Further, the test cells of Comparative Examples 3 and 4 suppressed the formation of wrinkles in the positive electrode core exposed portion but failed to suppress the resistance value.
Note that the present disclosure is not limited to the above-described embodiment and modifications thereof, and various changes and improvements can be of course made within the scope of the items described in the claims of the present application.
The present disclosure will be further described with the following embodiments.

Constitution 1:
A cylindrical secondary battery, comprising:

an electrode assembly in which a band-shaped positive electrode and a band-shaped negative electrode are wound along a longitudinal direction via a separator;
a non-aqueous electrolyte; and
a cylindrical housing can housing the electrode assembly and the non-aqueous electrolyte, wherein
the positive electrode has a positive electrode core and a positive electrode mixture layer disposed on a surface of the positive electrode core,

a positive electrode core exposed portion where the positive electrode core is exposed is formed at a portion in contact with only one end of the positive electrode in a transverse direction, and
when L denotes a length of the positive electrode in the longitudinal direction, the positive electrode core exposed portion is not formed within a range of L/10 from an external winding side in the longitudinal direction.

Constitution 2:
The cylindrical secondary battery according to Constitution 1, wherein

greater than or equal to six positive electrode core exposed portions are formed, and
a positive electrode tab is joined to each of the positive electrode core exposed portions.

Constitution 3:
The cylindrical secondary battery according to Constitution 1 or 2, wherein
the length of the positive electrode in the longitudinal direction is greater than or equal to 3000 mm.
Constitution 4:
The cylindrical secondary battery according to any one of Constitutions 1 to 3, wherein, when L denotes the length of the positive electrode in the longitudinal direction, the positive electrode core exposed portion is not formed within a range of L/6 from the external winding side of the positive electrode in the longitudinal direction.
Constitution 5:
The cylindrical secondary battery according to any one of Constitutions 1 to 4, wherein, when L denotes the length of the positive electrode in the longitudinal direction, the positive electrode core exposed portion is formed within a range of L/4 from the external winding side of the positive electrode in the longitudinal direction.
Constitution 6:
The cylindrical secondary battery according to any one of Constitutions 1 to 5, wherein

the negative electrode has a negative electrode core and a negative electrode mixture layer disposed on a surface of the negative electrode core,
a negative electrode core exposed portion where the negative electrode core is exposed is formed at one end portion of the negative electrode in the transverse direction, and
a negative electrode current collecting plate is joined to the negative electrode core exposed portion.

Constitution 7:
The cylindrical secondary battery according to any one of Constitutions 1 to 5, wherein

the negative electrode has a negative electrode core and a negative electrode mixture layer disposed on a surface of the negative electrode core,
a negative electrode core exposed portion where the negative electrode core is exposed is formed at one end portion of the negative electrode in the longitudinal direction, and
the negative electrode core exposed portion is in contact with an inner surface of the housing can.

REFERENCE SIGNS LIST

10 (Cylindrical) secondary battery, 11 Positive electrode, 12 Negative electrode, 13 Separator, 14 Electrode assembly, 15 Housing can, 16 Sealing assembly, 17, 18 Insulating plate, 19 Positive electrode tab, 20 Negative electrode tab, 21 Grooved portion, 22 Filter, 23 Lower vent member, 24 Insulating member, 25 Upper vent member, 26 Cap, 26A Opening portion, 27 Gasket, 30 Positive electrode corer, 32 Positive electrode mixture layer, 34 Positive electrode core exposed portion, 36 Protective member

## Claims

1. A cylindrical secondary battery, comprising:

an electrode assembly in which a band-shaped positive electrode and a band-shaped negative electrode are wound along a longitudinal direction via a separator;
a non-aqueous electrolyte; and
a cylindrical housing can housing the electrode assembly and the non-aqueous electrolyte, wherein
the positive electrode has a positive electrode core and a positive electrode mixture layer disposed on a surface of the positive electrode core,

a positive electrode core exposed portion where the positive electrode core is exposed is formed at a portion in contact with only one end of the positive electrode in a transverse direction, and

when L denotes a length of the positive electrode in the longitudinal direction, the positive electrode core exposed portion is not formed within a range of L/10 from an external winding side in the longitudinal direction.

2. The cylindrical secondary battery according to claim 1, wherein

greater than or equal to six positive electrode core exposed portions are formed, and

a positive electrode tab is joined to each of the positive electrode core exposed portions.

3. The cylindrical secondary battery according to claim 1, wherein the length of the positive electrode in the longitudinal direction is greater than or equal to 3000 mm.

4. The cylindrical secondary battery according to claim 1, wherein, when L denotes the length of the positive electrode in the longitudinal direction, the positive electrode core exposed portion is not formed within a range of L/6 from the external winding side of the positive electrode in the longitudinal direction.

5. The cylindrical secondary battery according to claim 1, wherein, when L denotes the length of the positive electrode in the longitudinal direction, the positive electrode core exposed portion is formed within a range of L/4 from the external winding side of the positive electrode in the longitudinal direction.

6. The cylindrical secondary battery according to any one of claims 1 to 5, wherein

the negative electrode has a negative electrode core and a negative electrode mixture layer disposed on a surface of the negative electrode core,

a negative electrode core exposed portion where the negative electrode core is exposed is formed at one end portion of the negative electrode in the transverse direction, and

a negative electrode current collecting plate is joined to the negative electrode core exposed portion.

7. The cylindrical secondary battery according to any one of claims 1 to 5, wherein

the negative electrode has a negative electrode core and a negative electrode mixture layer disposed on a surface of the negative electrode core,

a negative electrode core exposed portion where the negative electrode core is exposed is formed at one end portion of the negative electrode in the longitudinal direction, and

the negative electrode core exposed portion is in contact with an inner surface of the housing can.

FIG, 1

FIG. 2

## INTERNATIONAL SEARCH REPORT

| International application No. |
|---|
| **PCT/JP2024/030878** |

**A.    CLASSIFICATION OF SUBJECT MATTER**

*H01M 4/13*(2010.01)i; *H01M 10/052*(2010.01)i; *H01M 10/0587*(2010.01)i; *H01M 50/56*(2021.01)i;
*H01M 50/538*(2021.01)i; *H01M 50/545*(2021.01)i

FI:    H01M4/13: H01M50/538; H01M10/0587; H01M50/545; H01M50/56; H01M10/052

According to International Patent Classification (IPC) or to both national classification and IPC

**B.    FIELDS SEARCHED**

Minimum documentation searched (classification system followed by classification symbols)

H01M4/13; H01M10/052; H01M10/0587; H01M50/56; H01M50/538; H01M50/545

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2019/193882 A1 (PANASONIC INTELLECTUAL PROPERTY MANAGEMENT CO., LTD.) 10 October 2019 (2019-10-10) paragraphs [0013], [0019], [0021], [0022], [0031], [0047] | 1, 4 |
| Y | | 3, 6-7 |
| A | | 2, 5 |
| X | WO 2019/069890 A1 (SANYO ELECTRIC CO., LTD.) 11 April 2019 (2019-04-11) paragraphs [0012], [0013], [0016], [0020], [0036] | 1, 4 |
| Y | | 3, 6-7 |
| A | | 2, 5 |
| X | WO 2017/163557 A1 (HITACHI, LTD.) 28 September 2017 (2017-09-28) paragraphs [0013], [0021], [0046] | 1, 4-5 |
| Y | | 3, 6-7 |
| A | | 2 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 November 2024** | **26 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/030878** |

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2012-160282 A (HITACHI VEHICLE ENERGY LTD.) 23 August 2012 (2012-08-23) <br> paragraph [0042] | 3, 6-7 |
| Y | JP 2004-319311 A (SHIN-KOBE ELECTRIC MACHINERY CO., LTD.) 11 November 2004 (2004-11-11) <br> paragraph [0018] | 3, 6-7 |
| Y | JP 2007-227137 A (MATSUSHITA ELECTRIC INDUSTRIAL CO., LTD.) 06 September 2007 (2007-09-06) <br> paragraphs [0021]-[0024] | 6 |
| Y | WO 2022/181383 A1 (SANYO ELECTRIC CO., LTD.) 01 September 2022 (2022-09-01) <br> paragraphs [0025], [0027] | 7 |
| A | WO 2023/100756 A1 (PANASONIC ENERGY CO., LTD.) 08 June 2023 (2023-06-08) | 1-7 |

Form PCT/ISA/210 (second sheet) (July 2022)

**INTERNATIONAL SEARCH REPORT**
**Information on patent family members**

International application No.

**PCT/JP2024/030878**

| Patent document cited in search report | | | Publication date (day/month/year) | Patent family member(s) | | | Publication date (day/month/year) |
|---|---|---|---|---|---|---|---|
| WO | 2019/193882 | A1 | 10 October 2019 | US 2021/0013482 A1 paragraphs [0022], [0028], [0030], [0031], [0040], [0056] EP 3780162 A1 CN 111971820 A | | | |
| WO | 2019/069890 | A1 | 11 April 2019 | US 2020/0321593 A1 paragraphs [0016], [0017], [0020], [0025], [0041] CN 11164796 A | | | |
| WO | 2017/163557 | A1 | 28 September 2017 | JP 2017-174523 A | | | |
| JP | 2012-160282 | A | 23 August 2012 | US 2014/0030568 A1 paragraph [0079] WO 2012/105553 A1 CN 103348507 A | | | |
| JP | 2004-319311 | A | 11 November 2004 | (Family: none) | | | |
| JP | 2007-227137 | A | 06 September 2007 | US 2007/0196730 A1 paragraphs [0019]-[0023] CN 101026248 A | | | |
| WO | 2022/181383 | A1 | 01 September 2022 | US 2024/0145883 A1 paragraphs [0037], [0039] EP 4300645 A1 CN 116848722 A | | | |
| WO | 2023/100756 | A1 | 08 June 2023 | CN 118285006 A | | | |

Form PCT/ISA/210 (patent family annex) (July 2022)

**REFERENCES CITED IN THE DESCRIPTION**

**Patent documents cited in the description**

- JP 2004311282 A